# EUROPEAN PATENT APPLICATION

(11) **EP 4 335 978 A1**
(43) Date of publication of application: **13.03.2024**
(21) Application number: 22799067.8
(22) Date of filing: 29.04.2022
(51) Int. Cl.: E02F 3/96, E02F 3/36, B28D 1/08

(54) **WIRE SAW APPARATUS FOR EXCAVATOR**

(30) Priority: 04.05.2021 KR 20210057854
(71) Applicant: Egun Co., Ltd., Gwangju-si, Gyeonggi-do 12817 (KR)
(72) Inventor: LEE, Sung Jun, Gwangju-si, Gyeonggi-do 12808 (KR); LEE, Chae Mun, Seongnam-si, Gyeonggi-do 13298 (KR)
(74) Representative: Stolmár & Partner Patentanwälte PartG mbB
(86) International application number: PCT/KR2022/006211
(87) International publication number: WO 2022/235024

(57) **Abstract**

A wire saw apparatus for an excavator, according to the present invention, comprises: a support plate; an excavator connection part attached to the support plate so as to be able to be detachably attached to an excavator arm; a pair of guide rails attached to the support plate; an ascending/descending member which ascends or descends along the pair of guide rails; an electric motor for raising or lowering the ascending/descending member; a driving pulley rotated by a hydraulic motor attached to the ascending/descending member; a plurality of driven pulleys mounted to the support plate; and a wire mounted to the driving pulley and the plurality of driven pulleys.

## Description

### [Technical Field]

The present invention relates to a wire saw apparatus for excavators, and more particularly to a wire saw apparatus for excavators that is mounted to an excavator to cut rock, raw stone, concrete, metal, etc. so as to satisfy the specifications depending on the purpose and application.

### [Background Art]

In general, stone obtained by mining and processing raw stone is often used in the construction industry as construction materials for buildings and civil engineering works, for example, as building walls, road curbs, sidewalk blocks, or building floors.

Stone is mined from a stony mountain into bulky rectangular forms by a licensed operator and is transported to a stone processing company, where the stone is cut to appropriate thicknesses and areas and supplied as stone slabs or is cut again so as to satisfy specifications and surface-treated.

For example, a jet burner mining method using a jet burner, a drilling machine, and gunpowder or a wire saw mining method using a wire saw, a drilling machine, and gunpowder may be used as a method of mining raw stone from stony mountains.

The jet burner mining method is classified as a method of removing soil using equipment, such as an excavator, drilling a hole in raw stone (bedrock) using an air compressor and a drilling machine (a drill for making a hole), and filling the hole with gunpowder, and blasting the raw stone, thereby mining raw stone, or a method in which, when bedrock is formed, the size of a raw stone is determined, fire is ejected from an air compression crater using a jet burner (oil) to cut opposite sides of the bedrock in a longitudinal direction thereof while burning the stone, blasting holes are drilled in the uncut back and bottom of the raw stone are drilled vertically and horizontally using a rock drill (equipment for drilling blasting holes), the blasting holes are filled with gunpowder, and the raw stone is blasted, wherein the raw stone is divided into large chunks through drilling and blasting by size, and the divided raw stone is divided into small chunks again.

The jet burner mining method has the following environmental problems: a large amount of diesel fuel is used, which causes air pollution and increased expenses, large equipment and compressors must be separately installed, which generates tremendous noise, and stone dust is scattered by air pressure in a situation where high-pressure heat is generated, which generates a large amount of dust.

On the other hand, the wire saw mining method is a method of determining the size of a stone (bedrock), drilling vertical and horizontal holes using a longitudinal drilling machine such that the vertical and horizontal holes form an "L" shape, extending a wire saw through the drilled holes, rotating the wire saw to cut the stone while pulling both ends of the wire saw using a pulling machine, wherein the uncut back and bottom of the raw stone are drilled and blasted with gunpowder.

This wire saw cutting method has advantages such as minimizing environmental problems and noise generation, not using diesel (oil), and inhibiting scattering of dust, but there are problems such as poor working conditions and cutting efficiency, whereby it takes a lot of time to mine.

In particular, the wire saw method has the inconvenience of installing a separate fixed pulley to a raw stone to be cut in a cutting direction, and in particular, a wire saw machine must be provided in order to cut the raw stone, and therefore there is inconvenience caused by work.

In addition, the wire saw machine must be disposed in the direction in which the raw stone is cut, which is difficult and inconvenient.

### [Disclosure]

### [Technical Problem]

It is an object of the present invention to provide a wire saw apparatus for excavators configured such that a wire saw is configured to be rotatable 360 degrees and a wire saw body is rotatable through a link even after the wire saw apparatus is mounted to the excavator, thereby smoothly mining raw stone or cutting concrete, etc. while reducing a separate work time due to reinstallation of the wire saw.

It is another object of the present invention to provide a wire saw apparatus for excavators configured such that wire tension is maintained by upwardly and downwardly moving a drive pulley according to the cutting speed when cutting or sawing raw stone, whereby smooth cutting is achieved.

### [Technical Solution]

A wire saw apparatus for excavators according to the present invention to accomplish the above objects includes a support plate, an excavator connection unit coupled to the support plate so as to be removably coupled to an excavator arm, a pair of guide rails coupled to the support plate, an upward and downward movement member configured to move upward and downward along the pair of guide rails, an electric motor configured to upwardly and downwardly move the upward and downward movement member, a drive pulley configured to be rotated by a hydraulic motor coupled to the upward and downward movement member, a plurality of driven pulleys mounted to the support plate, and a wire mounted to the drive pulley and the plurality of driven pulleys.

The wire saw apparatus may further include a pair of auxiliary pulleys mounted to front opposite sides of the upward and downward movement member, the pair of auxiliary pulleys being configured to guide the movement of the wire.

The wire saw apparatus may further include a lead screw rotatably mounted between the support plate and the pair of guide rails, wherein the electric motor may forwardly and reversely rotate the lead screw.

The wire saw apparatus may further include a support frame extending upward from an upper surface of the support plate while being disposed at opposite sides of the pair of guide rails, wherein the pair of guide rails may be coupled to an upper end part of the support frame.

The electric motor may be installed in a control box disposed at an upper surface of the support frame so as to be hermetically sealed.

The upward and downward movement member may include a pair of rail holes, through which the pair of guide rails extends, and a screw hole, into which the lead screw is inserted so as to engage therewith.

The excavator connection unit may include a fastening plate portion having a plurality of fastening holes formed therein such that the angle of installation of the fastening plate portion on the support plate can be changed, a pair of bracket portions extending upward from the fastening plate portion, and a pair of coupling pins mounted at different heights between the pair of bracket portions so as to be coupled to the excavator arm.

A hydraulic pipe extending from the excavator may be connected to the hydraulic motor via the control box, and the wire saw apparatus may further include a flow rate control device provided in the control box, the flow rate control device being configured to control the flow rate of a fluid that flows through the hydraulic pipe.

### [Advantageous Effects]

As is apparent from the above description, a wire saw apparatus for excavators according to the present invention is configured to be easily removably mounted to an excavator arm, whereby it is possible to shorten the time required for wire saw installation.

In addition, the wire saw apparatus is rotatable 360 degrees through an excavator connection unit, whereby it is possible to efficiently perform vertical cutting and horizontal cutting (sawing).

Furthermore, a drive pulley is moved upward and downward depending on the sawing speed such that wire tension is maintained, whereby it is possible to smoothly cut concrete, rock, etc.

### [Description of Drawings]

FIG. 1 is a front perspective view showing a wire saw apparatus for excavators according to an embodiment of the present invention.
FIG. 2 is a rear perspective view showing the wire saw apparatus for excavators according to the embodiment of the present invention.
FIG. 3 is a side perspective view showing the wire saw apparatus for excavators according to the embodiment of the present invention.
FIG. 4 is a partial perspective view showing a lower part of the wire saw apparatus for excavators.
FIG. 5 is a partial enlarged perspective view of an upward and downward movement member of the wire saw apparatus for excavators.
FIG. 6 is a schematic view showing the configuration of a controller of the wire saw apparatus for excavators.

### [Best Mode]

The present invention may be variously changed and may have several embodiments, and therefore specific embodiments will be described in detail while being illustrated in the drawings. However, the present invention is not limited to the specific embodiments, and it should be understood that the present invention includes all alterations, equivalents, and substitutions falling within the idea and technical scope of the present invention.

The terms used in the present invention are used only to describe a specific embodiment, not to define the present invention. Singular forms include plural forms unless mentioned otherwise. It should be understood that the terms "comprises," "has," etc. specify the presence of stated features, numbers, steps, operations, elements, components, or combinations thereof described in this specification, but do not preclude the presence or addition of one or more other features, numbers, steps, operations, elements, components, or combinations thereof.

Hereinafter, preferred embodiments of the present invention will be described in detail with reference to the accompanying drawings. It should be noted that, in the accompanying drawings, the same elements are denoted by the same reference numerals wherever possible. In addition, a detailed description of known functions and configurations will be omitted when the same may obscure the subject matter of the present invention. In the accompanying drawings, some elements are exaggerated, omitted, or schematically illustrated for the same reason.

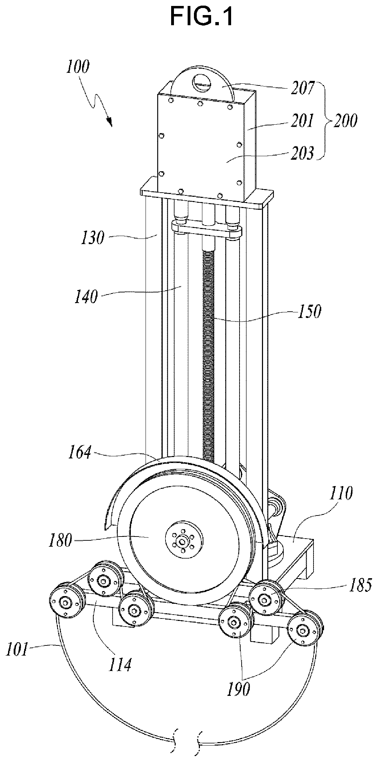

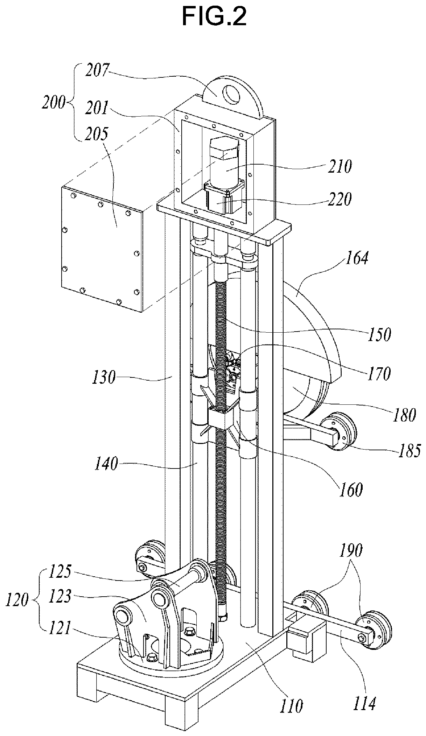

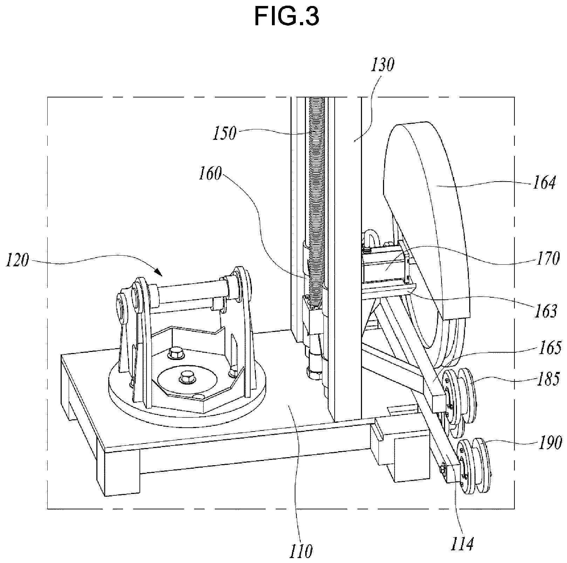

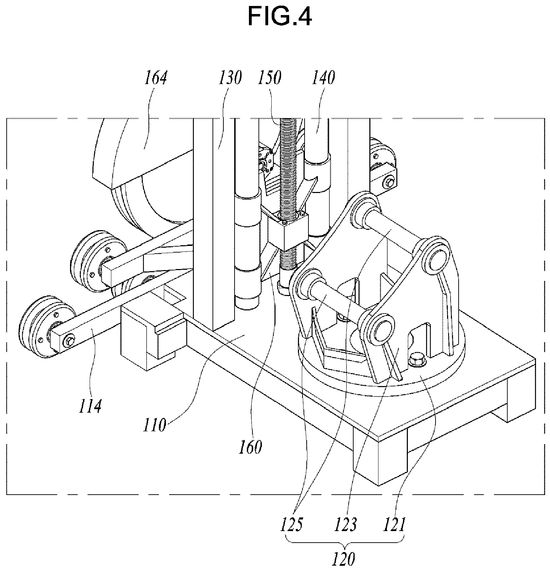

FIG. 1 is a front perspective view showing a wire saw apparatus for excavators according to an embodiment of the present invention, FIG. 2 is a rear perspective view showing the wire saw apparatus for excavators according to the embodiment of the present invention, FIG. 3 is a side perspective view showing the wire saw apparatus for excavators according to the embodiment of the present invention, and FIG. 4 is a partial perspective view showing a lower part of the wire saw apparatus for excavators.

The wire saw apparatus 100 for excavators according to the present invention includes a support plate 110, an excavator connection unit 120 coupled to the support plate so as to be removably coupled to an excavator arm, a pair of guide rails 140 coupled to the support plate, an upward and downward movement member 160 configured to move upward and downward along the pair of guide rails, an electric motor 210 configured to upwardly and downwardly move the upward and downward movement member, a drive pulley 180 configured to be rotated by a hydraulic motor 170 coupled to the upward and downward movement member, a plurality of driven pulleys 190 mounted to the support plate, and a wire 101 mounted to the drive pulley and the plurality of driven pulleys.

The wire saw apparatus 100 for excavators according to the present invention is an apparatus that is removably coupled to the excavator arm to cut rock, raw stone, concrete, metal, etc. using a wire having diamond beads provided on an outer circumferential surface thereof at predetermined intervals.

The support plate 110 may be an approximately rectangular metal plate having a predetermined thickness. The support plate 110 serves as a base frame configured to support the entirety of the wire saw apparatus 100.

The excavator connection unit 120 may be coupled to the support plate 110 by fastening using a plurality of bolts. A hook provided at the end of the excavator arm may be caught by the excavator connection unit 120 such that the wire saw apparatus 100 is removably coupled to the excavator arm.

The pair of guide rails 140 may be coupled to an upper surface of the support plate 110 by welding or screw fastening. The two guide rails 140 may be disposed so as to extend vertically from the upper surface of the support plate 110, and may be disposed spaced apart from each other by a predetermined distance. Each of the guide rails 140 may be configured in the form of a circular pipe having a smooth outer circumferential surface.

A support frame 130 may extend upward from the upper surface of the support plate 110 while being disposed outside the pair of guide rails 140. The support frame 130 may include a pair of column frame portions coupled vertically to the upper surface of the support plate 110 by welding and an upper plate frame portion configured in the form of a rectangular plate coupled horizontally to upper ends of the pair of column frame portions by welding. Consequently, upper ends of the pair of guide rails 140 may be coupled to the upper plate frame portion by fastening or welding.

The upward and downward movement member 160 may be slidably mounted to the pair of guide rails 140 so as to upwardly and downwardly move along the pair of guide rails 140. To this end, the upward and downward movement member 160 may be provided with a pair of rail holes, through which the pair of guide rails 140 is slidably inserted.

The upward and downward movement member 160 may be upwardly and downwardly moved by the electric motor 210. The electric motor 210 may be installed above the upper plate frame portion of the support frame 130.

The drive pulley 180 may be mounted so as to be rotated by the hydraulic motor 170, which is coupled to the upward and downward movement member 160. As shown in FIG. 3, a motor bracket 163 may be connected to a front upper side of the upward and downward movement member 160 so as to extend, and the hydraulic motor 170 may be mounted to the motor bracket 163. A rotating shaft of the hydraulic motor 170 may be connected to the drive pulley 180 in order to forwardly and reversely rotate the drive pulley 180. A pair of hydraulic hoses connected to a hydraulic pump of the excavator may be connected to the hydraulic motor 170 such that the hydraulic motor 170 can be operated by the excavator.

The plurality of driven pulleys 190 may be mounted to the front of the support plate 110. To this end, a pulley mount portion 114 configured in the form of a quadrangular pipe may be coupled to a front surface of the support plate 110, and the plurality of driven pulleys 190 may be rotatably mounted to the pulley mount portion 114. In the embodiment shown, the plurality of driven pulleys 190 may include two driven pulleys disposed on a front left side of the support plate 110 so as to be spaced apart from each other by a predetermined distance and two driven pulleys disposed on a front right side of the support plate so as to be spaced apart from each other by a predetermined distance.

The wire 101, which has a predetermined length and is provided with diamond beads, may be mounted to the drive pulley 180 and the plurality of driven pulleys 190. The wire 101 may be rotated by the drive pulley 180 and the plurality of driven pulleys 190 to cut an object.

Preferably, a pair of auxiliary pulleys 185 mounted to front opposite sides of the upward and downward movement member 160 to guide the movement of the wire 101 is included. As shown in FIG. 3, a pulley bracket 165 may be connected to a front lower side of the upward and downward movement member 160 so as to extend, and the pair of auxiliary pulleys 185 may be rotatably mounted to opposite sides of a front surface of the pulley bracket 165.

As shown in FIG. 1, the drive pulley 180 may be formed so as to be much larger than the auxiliary pulleys 185 and the driven pulleys 190. The wire 101 wound on an upper side of the drive pulley 180 may extend downward through the inner driven pulley 190, the auxiliary pulleys 185, and the outer driven pulley 190 in sequence. The downwardly extending wire 101 is disposed so as to enclose the object to be cut, and when the upward and downward movement member 160 moves upward, the drive pulley 180 and the auxiliary pulleys 185 may also move upward to keep the wire 101 tightened.

In addition, a cover member 164 configured to enclose the drive pulley 180 may be installed above the drive pulley 180. As shown in FIG. 3, the cover member 164 may be coupled to the motor bracket 163 so as to be fixed thereto. During operation, water or oil may be sprayed to the drive pulley 180 in order to cool the drive pulley 180 and the wire 101 and to remove foreign matter, and the cover member 164 may prevent the water or oil containing the foreign matter from splashing around the drive pulley 180.

As shown in FIGs. 1 and 2, a lead screw 150 may be rotatably mounted between the support plate 110 and the pair of guide rails 140. The lead screw 150, which is a screw having a square or trapezoidal thread formed on an outer circumferential surface of a rotating shaft, may be disposed between the pair of guide rails 140. A lower end of the lead screw 150 may be mounted to a bearing provided at the upper surface of the support plate 110, an upper part of the lead screw 150 may be mounted to a bracket bearing mounted between the pair of guide rails 140, and an upper end of the lead screw 150 may be coupled to the electric motor 210 through the upper plate frame portion of the support frame 130. The electric motor 210, which is a forwardly and reversely rotatable motor, may forwardly and reversely rotate the lead screw 150 to upwardly and downwardly move the upward and downward movement member 160 and the hydraulic motor 170 and drive pulley 180 coupled thereto.

As shown in FIG. 2, the electric motor 210 may be directly connected to the lead screw 150, but a reducer 220 may be connected to the electric motor 210 and the lead screw 150 may be connected to the reducer 220. The reducer 220 reduces the rotational speed of the electric motor 210 such that relatively small input torque can be input to the electric motor 210 to rotate the lead screw 150 with large output torque.

The electric motor 210 may be installed in a control box 200 disposed at an upper surface of the support frame 130 so as to be hermetically sealed. The control box 200 may be configured in the form of a cuboidal box and may be mounted to the upper surface of the upper plate frame portion of the support frame 130 by fastening or welding. The control box 200 may be provided in a lower surface thereof with a through-hole through which the rotating shaft of the electric motor 210 extends. As shown in FIGs. 1 and 2, the control box 200 may include a box body 201 having an open front surface and an open rear surface, and a front cover 203 and a rear cover 205 may be coupled respectively to the open front surface and the open rear surface of the box body 201 by fastening using a plurality of screws. In addition, a lifting ring portion 207 may be integrally formed at an upper end of the rear surface of the box body 201. A hook of a crane may be caught by the lifting ring portion 207, whereby the wire saw apparatus 100 may be lifted and moved.

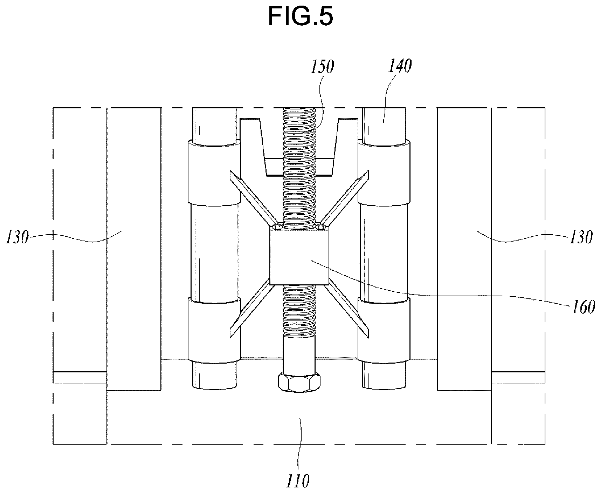

FIG. 5 is a partial enlarged perspective view of the upward and downward movement member of the wire saw apparatus for excavators.

The upward and downward movement member 160 may include a pair of rail holes, through which the pair of guide rails 140 extends, and a screw hole, into which the lead screw 150 is inserted so as to engage therewith. The pair of rail holes may be formed so as to respectively enclose the pair of guide rails 140, and the screw hole may be formed in a bracket portion integrally formed between two rail hole formation portions. The bracket portion may be provided with a plurality of reinforcement ribs integrally connected between the two rail hole formation portions and a screw hole formation portion.

Each rail hole is formed so as to have a smooth inner circumferential surface, whereas the screw hole is provided at an inner circumferential surface thereof with a thread corresponding to the thread of the lead screw 150. When the lead screw 150 is rotated, therefore, the upward and downward movement member 160 may be upwardly and downwardly moved by the lead screw 150, and may be supported so as not to be rotated by the pair of guide rails 140. When rotation of the lead screw 150 is stopped, the upward and downward movement member 160 may be supported by the thread of the lead screw 150 so as not to downwardly move from the height thereof such that the position of the upward and downward movement member is maintained.

As best seen in FIG. 4, the excavator connection unit 120 may include a fastening plate portion 121 having a plurality of fastening holes formed therein such that the angle of installation of the fastening plate portion on the support plate 110 can be changed, a pair of bracket portions 123 extending upward from the fastening plate portion, and a pair of coupling pins 125 mounted at different heights between the pair of bracket portions so as to be coupled to the excavator arm.

The fastening plate portion 121 is configured in the form of a disk, and four or more fastening holes may be formed through the fastening plate portion. The support plate 110 is also provided with four or more fastening holes corresponding to the fastening holes of the fastening plate portion 121, and therefore the fastening plate 121 may be coupled to the support plate 110 by fastening using a plurality of bolts. In addition, when the fastening plate portion 121 is rotated and fastened, the rotational position of the fastening plate portion 121 coupled to the support plate 110 may be easily changed.

The pair of bracket portions 123 may be coupled vertically to opposite sides of an upper surface of the fastening plate portion 121 by welding. Each bracket portion 123 may be provided in an upper end part thereof with a pair of pin holes, into which the pair of coupling pins 125 is inserted so as to be mounted thereto. The two pin holes may be formed at different heights.

The pair of coupling pins 125 may be inserted into the respective pin holes of each of the pair of bracket portions 123 so as to be mounted thereto. The pair of coupling pins 125 may be disposed at different heights so as to be parallel to each other. A pair of hooks provided at the end of the excavator arm may be caught by the pair of coupling pins 125 so as to be fixed thereto, whereby the wire saw apparatus 100 may be very easily mounted to the excavator arm.

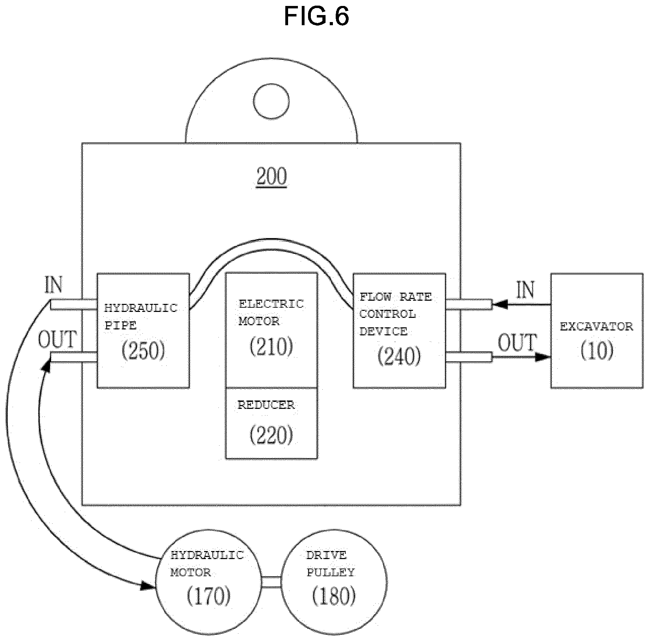

FIG. 6 is a schematic view showing the configuration of a controller of the wire saw apparatus for excavators.

A hydraulic pipe 250 extending from the excavator 10 may be connected to the hydraulic motor 170 via the control box 200, and a flow rate control device 240 configured to control the flow rate of a fluid that flows through the hydraulic pipe 250 may be further provided in the control box 200.

The hydraulic pipe 250 may include an inlet hose extending from the excavator 10 into the control box 200 and an outlet hose extending from the control box 200 to the excavator 10. In addition, the hydraulic pipe 250 may include an inlet hose extending to the hydraulic motor 170 and an outlet hose extending from the hydraulic motor 170.

The flow rate control device 240 may be provided in the control box 200 so as to be connected to the hydraulic pipe 250. The flow rate control device 240 may constitute a flow rate control circuit including one or more flow rate control valves.

Although not shown, the wire saw apparatus 100 according to the present invention may further include a remote controller connected to the control box 200 in a wired or wireless fashion. A user may manipulate the remote controller of the wire saw apparatus 100 mounted to the excavator arm in order to adjust the direction and speed of rotation of the hydraulic motor 170 through the flow rate control device 240 and to forwardly and reversely rotate the electric motor 210 such that the upward and downward movement member 160 is upwardly and downwardly moved, whereby tension of the wire 101 is maintained.

The wire saw apparatus for excavators according to the present invention is configured to be easily removably mounted to the excavator arm, whereby it is possible to shorten the time required for wire saw installation.

In addition, the wire saw apparatus is rotatable 360 degrees through the excavator connection unit, whereby it is possible to efficiently perform vertical cutting and horizontal cutting (sawing).

Furthermore, the drive pulley is moved upward and downward depending on the sawing speed such that wire tension is maintained, whereby it is possible to smoothly cut concrete, rock, etc.

### [Description of Reference Numerals]

10: Excavator
100: Wire saw apparatus for excavators 101: Wire 110: Support plate 114: Pulley mount portion
120: Excavator connection unit 121: Fastening plate portion 123: Bracket portion 125: Coupling pin
130: Support frame 140: Guide rail 150: Lead screw 160: Upward and downward movement member
163: Motor bracket 164: Cover member 165: Pulley bracket 170: Hydraulic motor
180: Drive pulley 185: Auxiliary pulley 190: Driven pulley 200: Control box
201: Box body 203: Front cover 205: Rear cover 207: Lifting ring portion
210: Electric motor 220: Reducer 240: Flow rate control device 250: Hydraulic pipe

Although an embodiment of the present invention has been described above, it will be apparent to a person having ordinary skill in the art to which the present invention pertains that the present invention can be variously modified and altered through addition, change, deletion, or supplement of components without departing from the idea of the present invention recited in the following claims and that such modifications and alterations fall within the scope of right of the present invention.

### [Industrial Applicability]

A wire saw apparatus for excavators according to the present invention is industrially applicable to cutting of concrete structures, rock, etc. at construction sites.

## Claims

1. A wire saw apparatus for excavators, the wire saw apparatus comprising:
a support plate;
an excavator connection unit coupled to the support plate so as to be removably coupled to an excavator arm;
a pair of guide rails coupled to the support plate;
an upward and downward movement member configured to move upward and downward along the pair of guide rails;
an electric motor configured to upwardly and downwardly move the upward and downward movement member;
a drive pulley configured to be rotated by a hydraulic motor coupled to the upward and downward movement member;
a plurality of driven pulleys mounted to the support plate; and
a wire mounted to the drive pulley and the plurality of driven pulleys.

2. The wire saw apparatus according to claim 1, further comprising a pair of auxiliary pulleys mounted to front opposite sides of the upward and downward movement member, the pair of auxiliary pulleys being configured to guide movement of the wire.

3. The wire saw apparatus according to claim 1, further comprising:
a lead screw rotatably mounted between the support plate and the pair of guide rails, wherein
the electric motor forwardly and reversely rotates the lead screw.

4. The wire saw apparatus according to claim 3, further comprising:
a support frame extending upward from an upper surface of the support plate while being disposed at opposite sides of the pair of guide rails, wherein
the pair of guide rails is coupled to an upper end part of the support frame.

5. The wire saw apparatus according to claim 4, wherein the electric motor is installed in a control box disposed at an upper surface of the support frame so as to be hermetically sealed.

6. The wire saw apparatus according to claim 3, wherein the upward and downward movement member comprises:
a pair of rail holes, through which the pair of guide rails extends; and
a screw hole, into which the lead screw is inserted so as to engage therewith.

7. The wire saw apparatus according to claim 1, wherein the excavator connection unit comprises:
a fastening plate portion having a plurality of fastening holes formed therein such that an angle of installation of the fastening plate portion on the support plate can be changed;
a pair of bracket portions extending upward from the fastening plate portion; and
a pair of coupling pins mounted at different heights between the pair of bracket portions so as to be coupled to the excavator arm.

8. The wire saw apparatus according to claim 5, wherein
a hydraulic pipe extending from the excavator is connected to the hydraulic motor via the control box, and
the wire saw apparatus further comprises a flow rate control device provided in the control box, the flow rate control device being configured to control the flow rate of a fluid that flows through the hydraulic pipe.
